# EUROPEAN PATENT SPECIFICATION

(11) **EP 0 961 049 B1**
(45) Date of publication and mention of the grant of the patent: **03.11.2004**
(21) Application number: 99109329.5
(22) Date of filing: 27.05.1999
(51) Int. Cl.: F16F 13/26

(54) **Vibration isolating apparatus**
Schwingungsisolierende Einrichtung
Dispositif d'isolation de vibrations

(30) Priority: 27.05.1998 JP 16413198; 14.10.1998 JP 29171498
(43) Date of publication of application: 01.12.1999
(73) Proprietor: BRIDGESTONE CORPORATION, Tokyo 104-0031 (JP)
(72) Inventor: Kojima, Hiroshi, Chuo-ku, Tokyo 104-0031 (JP)
(74) Representative: Dreiss, Fuhlendorf, Steimle & Becker

(56) References cited:
- EP-A- 0 547 287
- DE-A- 3 316 025
- US-A- 4 660 812
- US-A- 4 720 086
- PATENT ABSTRACTS OF JAPAN vol. 010, no. 014 (M-447), 21 January 1986 (1986-01-21) & JP 60 175835 A (HONDA GIKEN KOGYO KK), 10 September 1985 (1985-09-10)

## Description

### BACKGROUND OF THE INVENTION

### Field of the Invention

The present invention relates to a vibration isolating apparatus suitable for use at an engine mount or the like.

### Description of the Related Art

Among so-called engine mounts for supporting an automobile engine to a vehicle body while isolating vibration, there are, for example, engine mounts comprising mounting members respectively mounted to an engine and a vehicle, and a rubber-like elastic body for connecting the members to each other is known. However, because the engine is elastically supported to the vehicle body only by the rubber-like elastic body, it is difficult to handle all vibrations of various frequencies generated from the engine and the like.

Also known is a liquid-filled type vibration isolating apparatus in which liquid such as water or ethylene glycol is filled inside a rubber-like elastic body in an attempt to reduce vibration of a specific frequency such as idling vibration of the engine. In this apparatus, a pair of liquid chambers defined inside the rubber-like elastic body are connected to each other through a restricting passage having predetermined cross section and length. Vibration is damped by utilizing the liquid-column resonance or the like generated by the liquid moving back and forth through the restricting passage between both the liquid chambers when the vibration is generated.

However, although vibrations of specific frequencies which are set in advance can be greatly reduced, the specific frequencies are in a narrow range, and it is difficult to reduce vibrations of frequencies outside of this range. Therefore, the general versatility of the apparatus is inferior because it is difficult to adjust the apparatus so as to reduce vibration of a desired frequency.

Further, EP 0 547 287 Al describes a vibration isolating apparatus according to the preamble of claim 1. However besides the communication hole this apparatus has got a damping channel which in any case is open. This means that a liquid can move between the main liquid chamber and the auxiliary liquid chamber even if the communicating hole is closed by the opening/closing means. Therefore, the before mentioned versatility applies also to this known apparatus.

### SUMMARY OF THE INVENTION

The present invention has been accomplished to solve the above problems, and an object of the present invention is to easily reduce vibrations of a wide range of frequencies. The present invention therefore provides a vibration isolating apparatus comprising the features of claim 1.

Preferred embodiments of this vibration isolating apparatus are stated according the features of any one of claims 1 to 6.

### BRIEF DESCRIPTION OF THE DRAWINGS

Fig. 1 is a sectional view of a principal portion of a vibration isolating apparatus of the present invention with an opening/closing means being in a closed state.
Fig. 2 is a sectional view of the principal portion of the vibration isolating apparatus of the present invention with the opening/closing means being in an open state.
Fig. 3 is an enlarged view of the opening/closing means in Fig. 1.
Fig. 4 is an enlarged view of another example of the opening/closing means of the present invention.
Fig. 5 is a partial sectional view of another example of the vibration isolating apparatus of the present invention.
Fig. 6 is a plan view showing only a partitioning member.
Fig. 7 is a sectional view of the partitioning member taken along line A-A in Fig. 6.
Fig. 8 is a plan view showing another example of the partitioning member.
Fig. 9 is a sectional view similar to Fig. 7 but showing yet another example of the partitioning member.

### DESCRIPTION OF THE PREFERRED EMBODIMENTS

A vibration isolating apparatus of the present invention comprises elastic bodies disposed between a first mounting member and a second mounting member in series, wherein a spring constant (k1) of a first elastic body is substantially constant and a spring constant (k2) of a second elastic body is variable. Therefore, a spring constant K of the entire vibration isolating apparatus can be changed by a larger amount than that of a vibration isolating apparatus comprising elastic bodies with invariable spring constants, because of the relationship 1/K = 1/k1 + 1/k2 . For example, spring constants appropriate to vibrations of an engine of a vehicle at the time of traveling and vibrations of an engine of a vehicle at the time of idling can be selected.

In order to make the spring constant of the second elastic body variable, in the present invention, a hollowed-out portion is formed in the second elastic body, and a main liquid chamber filled with liquid is provided at the hollowed-out portion. An auxiliary liquid chamber is provided at the hollowed-out portion. The auxiliary liquid chamber communicates with the main liquid chamber through a communicating hole and has a variable volume. An opening/closing means opens and closes the communicating hole. When the communicating hole is brought into a closed state by operating the opening/closing means, because the liquid in the main liquid chamber (pressure-receiving liquid chamber) cannot move into the auxiliary chamber, it is difficult for the second elastic body to deform, and thus, the static spring constant of the entire apparatus increases. In other words, the vibration isolating apparatus takes on a rigid characteristic (a somewhat firm characteristic). On the other hand, when the communicating hole is brought into an open state by the opening/closing means, because the liquid in the main liquid chamber can easily move into the auxiliary liquid chamber, deformation of the second elastic body is facilitated, thereby decreasing the static spring constant of the elastic bodies. Thus, the vibration isolating apparatus takes on a flexible characteristic (a somewhat soft characteristic).

The first elastic body and the second elastic body are preferably made of a rubber-like material, but not limited to rubber-like material. The first elastic body and the second elastic body which are used are bonded by vulcanization to respective mounting plates and an intermediate member. A known rubber material such as natural rubber, butadiene rubber, stainless butadiene rubber, or a mixture of those rubbers is used as the material of the first and second elastic bodies. The second rubber-like elastic body is formed by alternately laminating inner leaves, i.e., restraining plates and rubber layers.

The main liquid chamber is formed by hollowing out the second elastic body, and is a portion surrounded by an inner wall, the intermediate member, and a partitioning wall member. The main liquid chamber is filled with a liquid such as water, ethylene glycol, or the like. The auxiliary liquid chamber is separated from the main liquid chamber by the partitioning wall member and has a diaphragm (rubber film) for allowing the auxiliary liquid chamber to expand and contract.

The communicating hole is formed in the partitioning wall which separates the main liquid chamber and the auxiliary liquid chamber from each other. Through the communication hole, the liquid in the chambers moves between the chambers. The communication hole has a cross section and a length such that liquid-column resonance is not generated in the frequency band width of engine idling vibration.

The opening/closing means comprises an opening/closing valve body and a driving device. The driving device is, for example, an electromagnet, a motor (stepping motor), or the like.

The embodiments of the present invention will be described in further detail hereinafter with reference to the drawings.

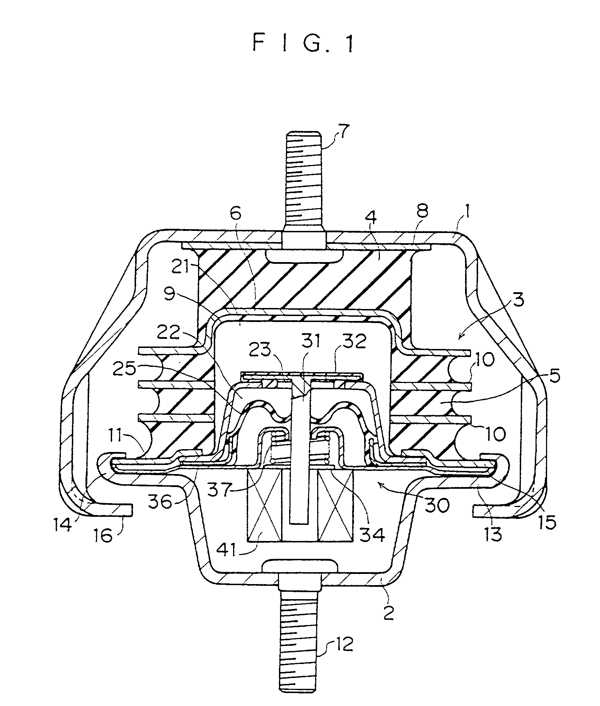

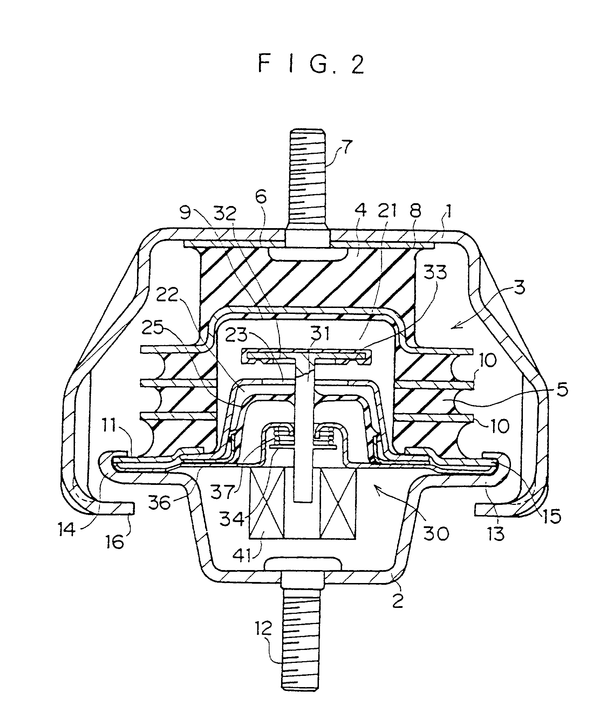

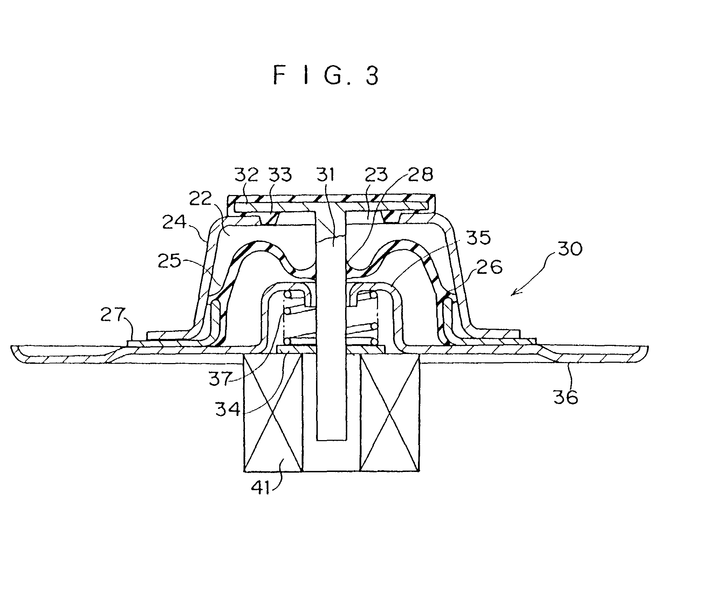

Fig. 1 is a sectional view of a principal portion of the vibration isolating apparatus of the present invention with the opening/closing means being in the closed state, and Fig. 2 is a sectional view of the vibration isolating apparatus with the opening/closing means being in an open state. Fig. 3 is an enlarged view of the opening/closing means.

In the drawings, reference numeral 1 designates a first mounting member and reference numeral 2 designates a second mounting member. The first and second mounting members are disposed to face each other. The first and second mounting members are connected by a rubber-like elastic body 3. The rubber-like elastic body 3 is divided into a first rubber-like elastic body 4 which is at the first mounting member 1 side, and a second rubber-like elastic body 5 which is at the second mounting member 2 side. The first and second rubber elastic bodies 4 and 5 are disposed in series. In the present embodiment, the first and second rubber-like elastic bodies 4 and 5 are separated from each other by an intermediate plate member 6 and are bonded by vulcanization to the intermediate plate member 6.

A plate 8, at which a standing mounting bolt 7 is provided, is bonded by vulcanization to an upper face of the first rubber-like elastic body 4. The mounting bolt 7 projecting from the first mounting member 1 is used for mounting the first mounting member 1 to the engine or the like.

On the other hand, a hollowed-out portion 9 is formed in the second rubber-like elastic body 5. The second rubber-like elastic body 5 is divided into three laminated layers by two inner leaves 10 and an annular outer leaf 11 having a larger outer diameter than the inner leaves 10. All of these layers are integrated by bonding by vulcanization to each other. The second rubber-like elastic body 5 is restrained from expanding in a lateral direction by the existence of the inner leaves 10. The outer leaf 11 is used for connecting the second rubber-like elastic body 5 to the second mounting member 2.

In the present embodiment, the second mounting member 2 is in the shape of a dish which opens upward, and a bolt 12 for mounting is provided so as to stand at a center portion of the second mounting member 2. A flat face 13 at a periphery of the second mounting member 2 is in contact with the outer leaf 11. A peripheral edge portion 14 of the flat face 13 is folded to cover a peripheral edge portion 15 of the outer leaf 11, thereby securing the outer leaf 11 to the second mounting member 2.

One of the first mounting member 1 and the second mounting member 2 is fixed to the engine side (fixed to either directly or indirectly to the engine) and the other is fixed to the vehicle body side (fixed to either directly or indirectly to the vehicle body) by the mounting bolts 7 and 12. In the present embodiment, the first mounting member 1 is in a shape of a bowl which opens downward, and a peripheral edge portion 16 of the first mounting member 1 is folded inward to overlap the flat face 13 of the second mounting member 2 with a given distance maintained between the peripheral edge portion 16 and the flat face 13. The first and second mounting members 1 and 2 interfere with each other, thereby functioning as stoppers for preventing further deformation of the first and second mounting members 1 and 2.

The hollowed-out portion 9 is formed in the second rubber-like elastic body 5, and the main liquid chamber to be filled with liquid is formed in the hollowed-out portion 9. The hollowed-out portion 9 is divided into an auxiliary chamber 22 and a main liquid chamber 21 by using the hollowed-out portion 9 of the second rubber-like elastic body 5 as a portion of the partitioning wall. The division is made by providing a dividing plate 24 having a communicating hole 23. A rubber-like diaphragm 25 is used as a portion of the partitioning wall for defining the auxiliary liquid chamber 22, and the volume of the auxiliary liquid chamber 22 is variable.

The diaphragm 25 which forms a portion of the partitioning wall of the auxiliary liquid chamber 22 has an outer peripheral edge 26, which is bonded by vulcanization to an annular plate 27, and an inner peripheral edge 28, which is bonded by vulcanization to a shaft 31 which will be described later.

The communicating hole 23 formed in the dividing plate 24 allows the filled-in liquid to move between the main liquid chamber 21 and the auxiliary liquid chamber 22. The communicating hole 23 is a portion of an opening/closing means 30 of both the chambers 21 and 22. The opening/closing means 30 comprises the shaft 31, which passes through the communicating hole 23, and a valve body 32, which is disposed in the main liquid chamber 21 and provided at a tip end of the shaft 31. By upward and downward movements of the shaft 31, the communicating hole 23 is opened and closed to communicate and divide the main liquid chamber 21 and the auxiliary liquid chamber 22 with and from each other. The valve body 32 may be provided with a seal rubber 33 in order to completely close the communicating hole 23.

A specific example of the mechanism for moving the shaft 31 upward and downward, i.e., for opening and closing the communicating hole 23, is as follows. A flange 34 is formed at an intermediate portion of the shaft 31. And an annular plate 36 having an annular face 35 which faces the flange 34 is disposed above the flange 34. A coil spring 37 is provided between the flange 34 and the annular face 35, such that a downward force is applied relatively and constantly to the shaft 31. On the other hand, in order to make the shaft 31 movable upward against the spring force of the coil spring 37, a solenoid coil 41 is disposed so as to surround a lower end of the shaft 31. By energizing the solenoid coil 41, the shaft 31 can be moved upward. By utilizing the coil spring 37 and the solenoid coil 41, the shaft 31 is movable upward and downward.

As compared with a restricting passage which is provided to damp vibration at the time of idling in a conventional liquid-filled type vibration isolating apparatus, the communicating hole 23 is a passage having a sufficiently large cross section and/or short length. This is for reducing the vibration by lowering the static spring constant without generating liquid-column resonance or the like due to movement of the liquid in the communicating hole in the frequency band width of the vibration to be reduced. In this way, vibrations of a wide range of frequencies, including vibration at the time of idling, can be reduced.

In order to secure the second rubber-like elastic body 5 to the outer leaf 11 and the second mounting member 2, an outer peripheral edge of the dividing plate 24, an outer peripheral edge of the annular plate 27, and an outer peripheral edge of the annular plate 36 are secured together.

Fig. 1 shows a state in which the communicating hole 23 is closed by the valve body 32 and the shaft 31 is moved downward by the spring force of the coil spring 37. Therefore, the liquid does not move between the main liquid chamber 21 and the auxiliary liquid chamber 22 at all, and a vibration isolating apparatus with the firm touch can be obtained. Thus, this state of the apparatus is applied to a traveling state of the vehicle or the like.

In Fig. 2, on the other hand, the solenoid coil 41 is energized to move the shaft 31 upward against the spring force of the coil spring 37. Because the communicating hole 23 is open in this case, the liquid can freely move between the main liquid chamber 21 and the auxiliary liquid chamber 22, and a vibration isolating apparatus with a relatively soft touch can be obtained. Therefore, this state of the apparatus is applied to an idling state of the vehicle or the like.

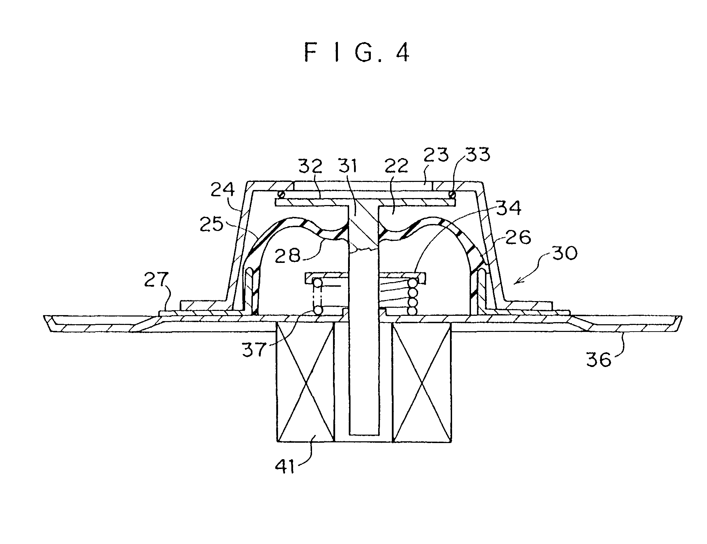

Fig. 4 shows a second example of the opening/closing mechanism of the present invention in which the coil spring 37 is disposed below the flange 34 of the shaft 31. The valve body 32 provided at the tip end of the shaft 31 is disposed within the auxiliary liquid chamber 22.

Therefore, due to the coil spring 37, the communicating hole 23 in the dividing plate 24 is cut off from the auxiliary liquid chamber 22 by the valve body 32. By passing electric current through the solenoid coil 41 in a direction opposite to that in the first example, the shaft 31 is moved downward, thereby opening the communicating hole 23.

It is also possible to not use the coil spring, and to pass elastic current in different directions through the solenoid coil 41 surrounding the shaft 31 to open and close the valve body 32. This structure is not shown in the drawings.

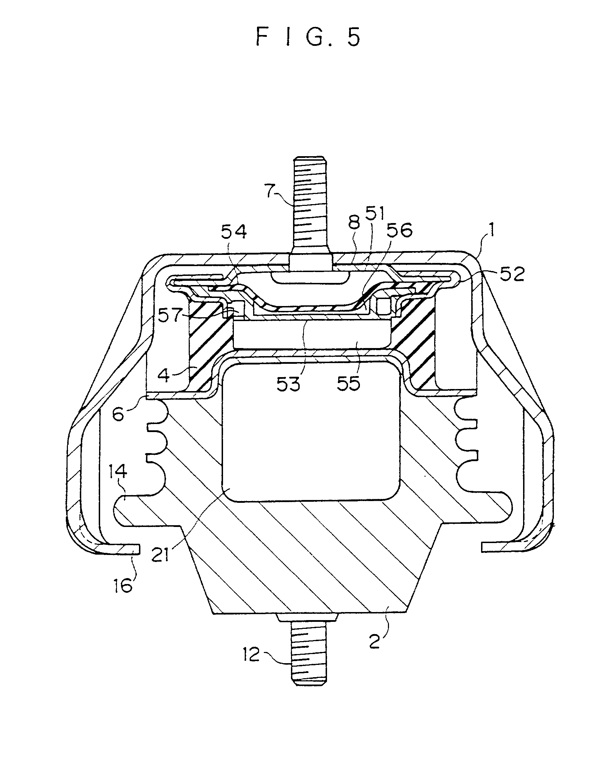

Fig. 5 shows an apparatus obtained by further improving the vibration isolating apparatus shown in Figs. 1 to 3. In other words, the first rubber-like elastic body 1 is improved to damp shake vibration of the engine. Fig. 5 is a partial sectional view showing the first rubber-like elastic body 4 as a principal portion. The structure below the intermediate plate member 6 is similar to that shown in Fig. 1 and is omitted from Fig. 5.

The first rubber-like elastic body 4 is a cylindrical body having a hollow portion 51 in a vertical direction. An annular mounting plate 52 is bonded by vulcanization to an upper end of the first rubber-like elastic body 4. The annular mounting plate 52 is folded to cover a peripheral edge portion of the plate 8 so as to be integral with the plate 8. The hollow portion 51 is partitioned into upper and lower portions by a partitioning member 53 made preferably of resin, and the diaphragm (rubber film) 54 is disposed above the partitioning member 53. Peripheral edge portions of the partitioning member 53 and the diaphragm 54 are sandwiched between the plate 8 and the annular plate 52, thereby forming a second main liquid chamber 55 and a second auxiliary liquid chamber 56, the latter of which disposed at the side of diaphragm 54.

Liquid is filled in the second main liquid chamber 55 and the second auxiliary liquid chamber 56, and a restricting passage 57 which communicates the second main liquid chamber 55 and the second auxiliary liquid chamber 56 is formed in the partitioning member 53 so as to allow the liquid in each chambers to move to the other chamber.

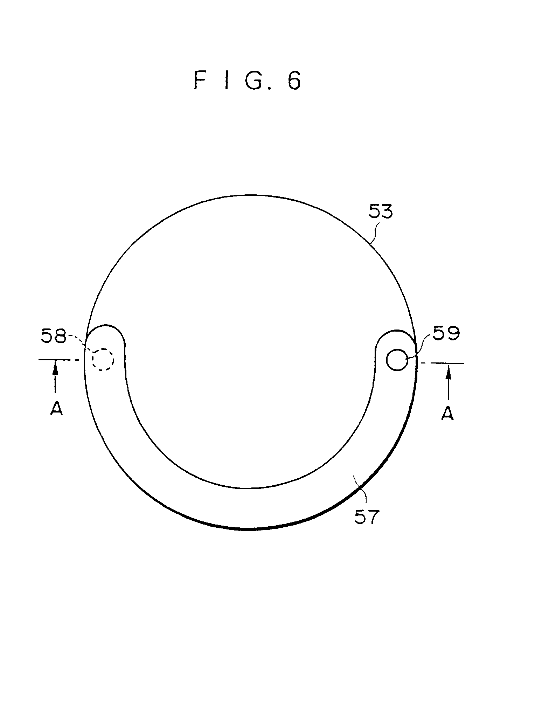

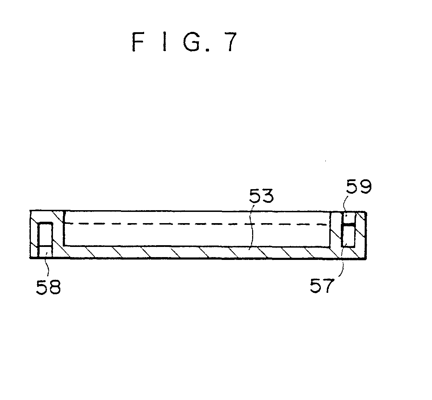

Fig. 6 is a plan view of the partitioning member 53 and Fig. 7 is a sectional view of the partitioning member 53 taken along line A-A in Fig. 6. In this case, the restricting passage 57 is formed in the vicinity of the peripheral edge portion of the partitioning member 53, and has a length of substantially one-half of the circumference of the partitioning member 53 and is tunnel-shaped. Furthermore, the restricting passage 57 has opening portions 58 and 59 which open to the second main liquid chamber 55 and to the second auxiliary liquid chamber 56, respectively. With this structure, if this vibration isolating apparatus is mounted to a vehicle, the liquid moves back and forth between the second main liquid chamber 55 and the second auxiliary liquid chamber 56 through the restricting passage 57, thereby damping the shake vibration (of 10 to 20 Hz, for example) of the engine generated mainly while the vehicle is travelling.

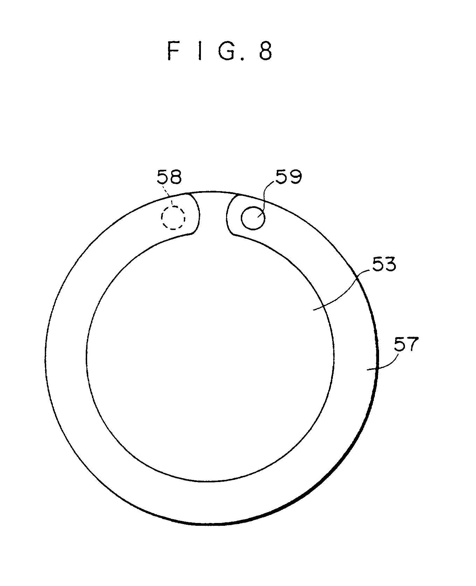

The restricting passage 57 has the length of substantially one-half of the circumference of the partitioning member 53 in Fig. 6, but the length can be set arbitrarily. Fig. 8 is a plan view of the partitioning member 53 in which the restricting passage 57 has a length substantially equal to the entire circumference of the partitioning member 53.

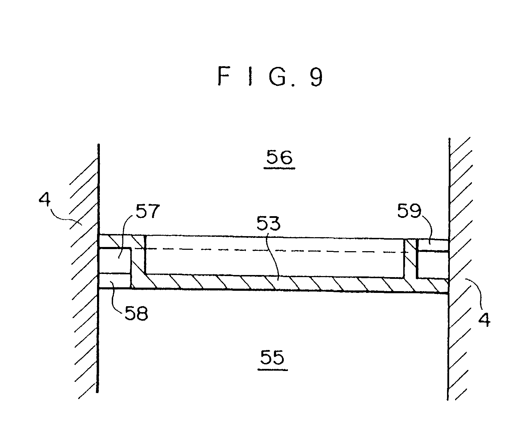

Moreover, the restricting passage 57 is not necessarily tunnel-shaped, and, for example, may be in the shape of a peripheral groove formed by opening a side of the partitioning member 53 as shown in Fig. 9. In this case, when the partitioning member 53 is placed in the vibration isolating apparatus, the peripheral groove is closed by the first rubber-like elastic body 1, and the restricting passage 57 is formed as a result.

The present invention provides a vibration isolating apparatus in which the static spring constant is variable, which was difficult previously. According to the present invention, vibrations of various frequencies generated from the engine or the like can be reduced by a single vibration isolating apparatus.

## Claims

1. A vibration isolating apparatus, comprising:
a first mounting member (1) connected to a vibration generating portion;
a second mounting member (2) connected to a vibration receiving portion; and
an elastic body (3) connecting said first mounting member (1) and said second mounting member (2),
wherein said elastic body (3) is divided into a first elastic body (4) at a side of said first mounting member (19 and a second elastic body (5) at a side of said second mounting member (2);
a hollowed-out portion (9) is formed in one of said first elastic body (4) and said second elastic body (5);
said hollowed-out portion (9) has a main liquid chamber (21) filled with liquid, an auxiliary liquid chamber (22) communicating with said main liquid chamber (21) through a communicating hole (23) and having a variable volume, and an opening/closing means (30) for opening and closing said communicating hole (23), **characterized in that** a static spring constant of said elastic body (3) is varied by opening the communication hole (23) by said opening/closing means (30) to allow moving the liquid between the main liquid chamber (21) and the auxiliary liquid chamber (22), and by closing the communication hole (23) by said opening/closing means (30) to prevent the liquid from moving between the main liquid chamber (21) and the auxiliary liquid chamber (22).

2. A vibration isolating apparatus according to claim 1, wherein an intermediate member (6) is disposed between said first elastic body (4) and said second elastic body (5).

3. A vibration isolating apparatus according to claim 1, wherein a portion of a partitioning wall (25) of said auxiliary liquid chamber (22) is a rubber diaphragm.

4. A vibration isolating apparatus according to claim 1, wherein an inner leaf (10) is embedded in one of said first elastic body (4) and said second elastic body (5) so as to surround said hollowed-out portion (9).

5. A vibration isolating apparatus according to claim 1 further comprising a coil spring(37) which urges a shaft (31) of the opening/closing means (30) to a direction such that the opening/closing means (30) closes the communication hole (23).

6. A vibration isolating apparatus according to claim 1, wherein a valve body (32) of the opening/closing means (30) is disposed at the main liquid chamber (21).

## Patentansprüche

1. Schwingungsisolierende Vorrichtung, welche aufweist:
ein erstes Befestigungselement (1), welches mit einem schwingungserzeugenden Teil verbunden ist;
ein zweites Befestigungselement (2), welches mit einem schwingungserhaltenden Teil verbunden ist; und
einen elastischen Körper (3), welcher das erste Befestigungselement (1) und das zweite Befestigungselement (2) verbindet,
wobei der elastische Körper (3) in einen ersten elastischen Körper (4) an einer Seite des ersten Befestigungselements (1) und einen zweiten elastischen Körper (5) an einer Seite des zweiten Befestigungselements (2) geteilt ist;
ein ausgehöhlter Teil (9) entweder in dem ersten elastischen Körper (4) oder dem zweiten elastischen Körper (5) gebildet ist;
der ausgehöhlte Teil (9) eine mit Flüssigkeit gefüllte Hauptflüssigkeitskammer (21), eine Hilfsflüssigkeitskammer (22), welche mit der Hauptflüssigkeitskammer (21) über ein Verbindungsloch (23) verbunden ist und ein veränderliches Volumen hat, und eine Öffnungs-/Schließvorrichtung (30) zum Öffnen und Schließen des Verbindungslochs (23) aufweist, **dadurch gekennzeichnet, dass** eine statische Federkonstante des elastischen Körpers (3) verändert wird, indem das Verbindungsloch (23) durch die Öffnungs-/Schließvorrichtung (30) geöffnet wird, um zu ermöglichen, dass die Flüssigkeit zwischen der Hauptflüssigkeitskammer (21) und der Hilfsflüssigkeitskammer (22) fließen kann, und indem das Verbindungsloch (23) durch die Öffnungs-/Schließvorrichtung (30) geschlossen wird, um zu verhindern, dass die Flüssigkeit zwischen der Hauptflüssigkeitskammer (21) und der Hilfsflüssigkeitskammer (22) fließen kann.

2. Schwingungsisolierende Vorrichtung gemäß Anspruch 1, wobei ein Zwischenelement (6) zwischen dem ersten elastischen Körper (4) und dem zweiten elastischen Körper (5) angeordnet ist.

3. Schwingungsisolierende Vorrichtung gemäß Anspruch 1, wobei ein Teil einer Trennwand (25) der Hilfsflüssigkeitskammer (22) eine Membrane aus Gummi ist.

4. Schwingungsisolierende Vorrichtung gemäß Anspruch 1, wobei ein inneres Blatt (10) in einem, entweder dem ersten elastischen Körper (4) oder dem zweiten elastischen Körper (5) eingebettet ist, derart, dass es den ausgehöhlten Teil (9) umgibt.

5. Schwingungsisolierende Vorrichtung gemäß Anspruch 1, welche weiter eine Schraubenfeder (37) aufweist, welche einen Schaft (31) der Öffnungs-/Schließvorrichtung (30) in eine Richtung treibt, derart, dass die Öffnungs-/Schließvorrichtung (30) das Verbindungsloch (23) schließt.

6. Schwingungsisolierende Vorrichtung gemäß Anspruch 1, wobei ein Ventilkörper (32) der Öffnungs-/Schließvorrichtung (30) an der Hauptflüssigkeitskammer (21) angeordnet ist.

## Revendications

1. Dispositif d'isolation aux vibrations, comprenant :
un premier élément de montage (1) relié à une partie produisant des vibrations ;
un second élément de montage (2) relié à une partie recevant des vibrations ; et
un corps élastique (3) reliant ledit premier élément de montage (1) et ledit second élément de montage (2),
dans lequel ledit corps élastique (3) est divisé en un premier corps élastique (4) sur un côté dudit premier élément de montage (19) et un second corps élastique (5) sur un côté dudit second élément de montage (2) ;
une partie creuse (9) est formée dans l'un desdits premier corps élastique (4) et second corps élastique (5) ;
ladite partie creuse (9) présente une chambre à liquide principale (21) remplie de liquide, une chambre à liquide auxiliaire (22) communicant avec ladite chambre à liquide principale (21) à travers un trou de communication (23) et ayant un volume variable, et des moyens d'ouverture/ fermeture (30) pour ouvrir et fermer ledit trou de communication (23), **caractérisé en ce qu'**on fait varier une constante de rappel statique dudit corps élastique (3) en ouvrant le trou de communication (23) par lesdits moyens d'ouverture/ fermeture (30) pour permettre de déplacer le liquide entre la chambre à liquide principale (21) et la chambre à liquide auxiliaire (22), et en fermant le trou de communication (23) par lesdits moyens d'ouverture/ fermeture (30) pour empêcher que le liquide ne se déplace entre la chambre à liquide principale (21) et la chambre à liquide auxiliaire (22).

2. Dispositif d'isolation de vibrations selon la revendication 1, dans lequel un élément intermédiaire (6) est disposé entre ledit premier corps élastique (4) et ledit second corps élastique (5).

3. Dispositif d'isolation aux vibrations selon la revendication 1, dans lequel une partie d'une cloison de séparation (25) de ladite chambre à liquide auxiliaire (22) est un diaphragme en caoutchouc.

4. Dispositif d'isolation aux vibrations selon la revendication 1, dans lequel une feuille intérieure (10) est imbriquée dans l'un desdits premier corps élastique (4) et second corps élastique (5) de manière à entourer ladite partie creuse (9).

5. Dispositif d'isolation aux vibrations selon la revendication 1, comprenant en outre un ressort hélicoïdal (37) qui sollicite un arbre (31) des moyens d'ouverture/ fermeture (30) dans une direction de sorte que les moyens d'ouverture/ fermeture (30) ferment le trou de communication (23).

6. Dispositif d'isolation aux vibrations selon la revendication 1, dans lequel un corps de soupape (32) des moyens d'ouverture/de fermeture (30) est disposé au niveau de la chambre à liquide principale (21).
